(19) **Europäisches Patentamt**
**European Patent Office**
**Office européen des brevets**

(11) **EP 3 974 575 B1**

(12) **EUROPEAN PATENT SPECIFICATION**

(45) Date of publication and mention
of the grant of the patent:
**06.09.2023  Bulletin 2023/36**

(21) Application number: **21198792.0**

(22) Date of filing: **24.09.2021**

(51) International Patent Classification (IPC):
***D21C 3/00*** *(2006.01)*          ***D21C 3/22*** *(2006.01)*
***D21C 7/00*** *(2006.01)*

(52) Cooperative Patent Classification (CPC):
**D21C 7/00; D21C 3/00; D21C 3/22**

(54) **APPARATUS FOR AND METHOD OF MEASURING OUTPUT MATERIAL OF PULP PROCESSING AND APPARATUS FOR AND METHOD OF CONTROLLING PULP PROCESSING**

VORRICHTUNG UND VERFAHREN ZUR MESSUNG DES AUSGANGSSTOFFES EINER ZELLSTOFFVERARBEITUNG UND VORRICHTUNG ZUR STEUERUNG DER ZELLSTOFFVERARBEITUNG

APPAREIL ET PROCÉDÉ DE MESURE DE MATIÈRE DE SORTIE DU TRAITEMENT DE PULPE ET APPAREIL ET PROCÉDÉ DE COMMANDE DU TRAITEMENT DE PULPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2020  FI 20205932**

(43) Date of publication of application:
**30.03.2022  Bulletin 2022/13**

(73) Proprietor: **Valmet Automation Oy**
**02150 Espoo (FI)**

(72) Inventors:
• **TERVO, Heidi**
**02150 Espoo (FI)**
• **PYYKKÖNEN, Ilkka**
**02150 Espoo (FI)**
• **JANHUNEN, Petri**
**02150 Espoo (FI)**

(74) Representative: **Kolster Oy Ab**
**Salmisaarenaukio 1**
**P.O. Box 204**
**00181 Helsinki (FI)**

(56) References cited:
**EP-A1- 3 296 457**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field

The invention relates to an apparatus for and a method of measuring a output material of a pulp processing and an apparatus for and a method of controlling pulp processing.

### Background

Fly ash plays an important role in fouling and corrosion particularly in upper parts of the recovery boiler such as heat exchanger tubes. It also increases the circulation load of the chemicals in the pulping process. The circulation load, fouling and corrosion, in turn, decrease the economic efficiency of the pulping.

In order to estimate and possibly control the negative effects on the recovery boiler system, percentages of the main components of the fly ash should be known. The main components of the electric filter are sodium sulfate ($Na_2SO_4$), potassium sulfate ($K_2SO_4$), sodium carbonate ($Na_2CO_3$), sodium chloride ($NaCl$), potassium carbonate ($K_2CO_3$) and potassium chloride ($KCl$). Samples of the fly ash and possibly also of black, green and white liquor can be collected at regular intervals and measured separately in a laboratory using chemical analysis. However, the measurements made in a laboratory can be performed far too infrequent and each of the measurements is slow for a proper monitoring and control.

Hence, an improvement in the measurement would be welcome.

### Brief description

The present invention seeks to provide an improvement in the measurements.

The invention is defined by the independent claims. Embodiments are defined in the dependent claims.

### List of drawings

Example embodiments of the present invention are described below, by way of example only, with reference to the accompanying drawings, in which

Figure 1 illustrates an example of a recovery boiler system of kraft pulping;
Figure 2 illustrates an example of an ion-selective electrode arrangement with an electrode system within a measurement chamber;
Figure 3A illustrates an example of a slope check and/or calibration curve of the ion-selective electrode arrangement;
Figure 3B illustrates an example of titration with an equivalence point;
Figure 4 illustrates an example of the ion-selective electrode arrangement with three electrodes in a first measurement chamber and one electrode in an another measurement chamber;
Figure 5 illustrates an example of the ion-selective electrode arrangement with four electrodes each of which is in its own measurement chamber;
Figure 6 illustrates an example of a data processing unit; and
Figure 7 illustrates of an example of a flow chart of a measuring and controlling method.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

It should be noted that while Figures illustrate various embodiments, they are simplified diagrams that only show some structures and/or functional entities. The connections shown in the Figures may refer to operational or physical connections. It is apparent to a person skilled in the art that the described apparatus may also comprise other functions and structures than those described in Figures and text. It should be appreciated that details of some functions, structures, and the signalling used for measurement and/or controlling are irrelevant to the actual invention. Therefore, they need not be discussed in more detail here.

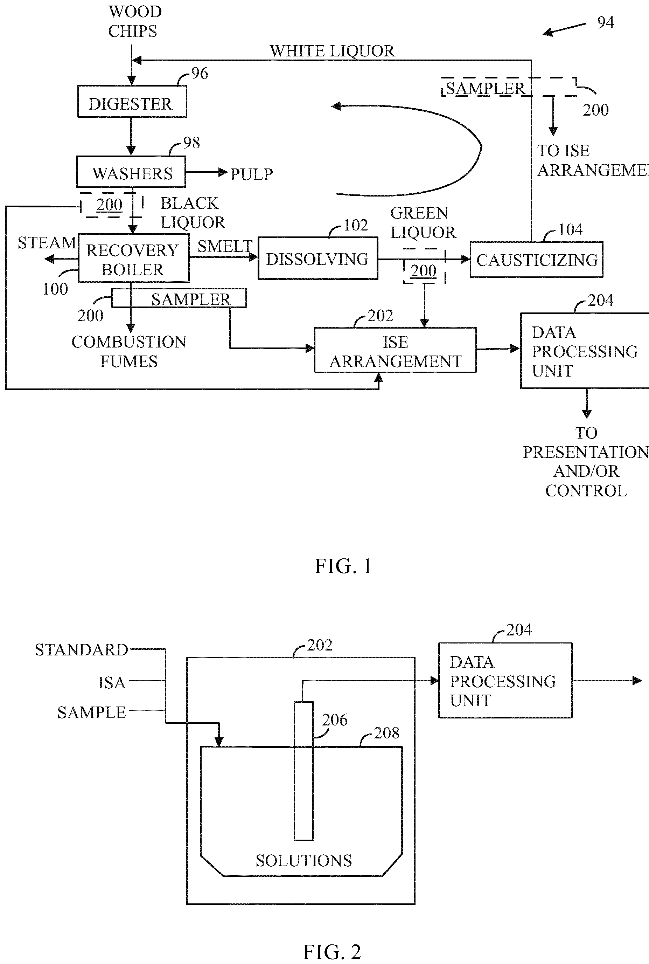

Figure 1 illustrates an example of a recovery boiler system of a kraft pulping. Chips of wood and/or one or other plants are fed in a digester 96, which cooks the chips in pressurized conditions with cooking liquor. The digester 96 may operate in a batch or continuous manner. The digester 96 feeds the cooked pulp, i.e. brown stock to a washer 98 which washes the brown stock. There the cooking liquors are separated from the cellulose fibers. The washer 98 outputs washed and rather white pulp for paper and board processes, for example, and black liquor, which includes lignin fragments, carbohydrates, sodium carbonate $Na_2CO_3$, sodium sulfate, other inorganic salts and/or other organic compounds, for example.

The black liquor is then fed to the recovery boiler 100 where the black liquor is combusted. A heat recovery system may recover the heat energy of the combustion and the heat energy may be distributed as heated steam to desired locations (see arrow and HEAT in Figure 1). The residue that does not burn then falls to the bottom of the recovery boiler 100, where the incombustible compounds form smelt which may include molten salts, for example. The smelt may then be fed to a dissolving process 102 where the smelt may be dissolved in water thereby forming green liquor. The green liquor may include sodium carbonate $Na_2CO_3$ and sodium sulphide $Na_2S$, for example.

The causticizing process 104 may receive the green liquor and convert it to white liquor which includes sodium hydroxide NaOH and sodium sulphide $Na_2S$, for example. The white liquor may be recycled to the digester 96 as a cooking liquor through a circulation 94.

The combustion in the recovery boiler 100 produces combustion fumes which also include or carry with fly ash, which causes the negative effects on the recovery boiler system as described in the Background. The fouling can be defined as accumulation or deposition of unwanted material on surfaces of the recovery boiler 100, and directly or indirectly obstructing and/or interfering the combustion, exit of the combustion fumes including fly ash, and/or heat exchange of the recovery boiler 100.

A sample of fly ash can be collected from a filter of the recovery boiler 100 and the sample is dissolved in a fixed amount of pure water in order to form a sample solution. The filter may comprise a particle filter. The particle filter, in turn, may comprise an electric filter such as an electrostatic precipitator.

When a sample of the fly as is taken, an automatic apparatus for measuring output material of a pulp processing may be utilized. The output material may refer to a side product, by-product or a main product of the pulp processing. In general, the output material includes one or more substances output or generated in or by the kraft pulp process. In a first process example, the output material is the fly ash.

The apparatus of the pulp processing may then comprise or be in an operational connection with a sampler 200 of the fly ash. Such a sampler 200 may be like any of those described in the prior art.

The sampler 200 may be like the one described in the patent document FI20205505, for example. The sampler 200 may comprises a piston and a cylinder for holding the piston with a body having a hole extending through the body. The cylinder has a first end, which is open, the first end of the cylinder being slanted such that underside of the cylinder extends farther than upper side. A mechanism moves the piston between inward and outward positions. The apparatus gathers fly ash flowing past the piston into the hole of the piston when the piston is in the outward position and moves the gathered fly ash by moving the piston into the inward position. An input feed is configured to spread fluid through the hole filled with fly ash to flush the fly ash to an output feed.

The fly ash may be dissolved in water before a measurement such that a sample is actually a solution in a liquid form.

The apparatus comprises at least one ion-selective electrode arrangement (ISE) 202, which measures the output material such as a sample of fly ash. The sample of fly ash of the recovery boiler 100 is expected to include sodium sulfate ($Na_2SO_4$), potassium sulfate ($K_2SO_4$), sodium carbonate ($Na_2CO_3$), sodium chloride (NaCl), potassium carbonate ($K_2CO_3$) and potassium chloride (KCl). The at least one ion-selective electrode arrangement 202 provides the data processing unit 204 with information on quantity of at least one of the following: potassium (K), chlorine (Cl), sodium (Na), and carbonate ($CO_3$, $HCO_3$). That is, the term carbonate may refer to carbon trioxide and/or hydrogen carbonate. Because chlorine is measured as ion (Ch), its name may also appear in literature in a form chloride. The data processing unit 204 computes quantity of sulfate ($SO_4$) of the output material based on the information received from the at least one ion-selective electrode arrangement 202 for further processing.

The computation of the quantity of sulfate in the sample may be based on stoichiometry, for example, which is a section of chemistry allowing to determine one unknown quantity in a reaction equation using known relationships between reactants and output materials in a chemical reaction. Additionally, because the sample is electrically neutral, i.e. it is not electrically negative or positive, the total charge of positive ions, which are the cations, and the charge of negative ions, which are anions, are equal. Additionally, because different elements in the sample may have different valence values and hence some ions may have a charge of N coulombs and some other ions may have a charge of M coulombs, where N and M are positive or negative whole numbers, the ion balance can be computed based on the stoichiometry. The stoichiometry can be used to define relative amounts substances in moles i.e. coefficients in an electrically balanced chemical reaction equation. Hence, the balanced chemical reactions are related to relative amounts of reactants and/or output materials in said chemical reaction, and the relative amounts, in turn, determine quantitative data of different substances participating in the chemical reaction.

The further processing may refer to a presentation of information on one or more quantities received or computed by the data processing unit 204 or controlling directly or indirectly at least one of the digester 96, washers 98, recovery boiler 100, dissolving process 102, causticizing process 104, input of white liquor to the digester 96 and/or the circulation/recycling 94.

In an embodiment an example of which is illustrated in Figure 2 the at least one ion-selective electrode arrangement 202 comprises electrode system 206 which is within a measurement chamber 208 and capable of having contact with the solutions that are inserted in the chamber 208. The electrode system 206 may comprise one or more electrodes. The solutions include the samples, one or more ionic strength adjustors and/or one or more standards, which may also be called analyte standards. In an embodiment, the one or more ionic strength adjustors may include only one ionic strength adjustor substance. In an embodiment, the one or more standards may include only one standard substance.

The one or more ionic strength adjustors may be added to all samples and the one or more standards to keep differences in ionic strength low or constant i.e. a purpose is to have a uniform background ionic strength during a measurement. The one or more ionic strength adjustors should not contain ions which interfere with the electrode's response to analyte ions. The analyte is a substance that is being analyzed. It may be the one or more standards, a sample, a sample with the one or more ionic strength adjustors or a combination of a sample, the one or more standards and the one or more ionic strength adjustors.

The one or more standards have a known concentration of known element or compound that are measured, i.e. potassium (K), chlorine (Cl) sodium (Na), or carbonate ($CO_3$, $HCO_3$), and the standards are used for calibration of the measurement and for checking if the ISE arrangement operates properly or not. A standard for one measurement may be an ionic strength adjustor for another measurement.

If a quantity of potassium (K) of the sample is measured using the apparatus for measuring the output material of a pulp processing according to Figure 2, a direct measurement may be performed in a following manner, the direct measurement being known by a skilled person, *per se.* The ionic strength of samples and standards may be adjusted to be the same by addition of the one or more ionic strength adjustors. In this example, the standards may include at least one solution of potassium sulfate $K_2SO_4$ and potassium chloride (KCl) without limiting to these. In this example the one or more ionic strength adjustors may include sodium sulfate ($Na_2SO_4$) and/or sodium chloride (NaCl). The standard solutions with various concentrations of potassium may be measured and the measured potentials (mV) of the electrode 206 may be plotted against the standard concentration to construct a calibration curve. The curve may be linear when the scale of the electrode potentials is logarithmic.

Then an electrical potential of the sample of the fly ash is measured with the electrode 206 and the data processing unit 204 may quantify a potassium concentration in the sample using the calibration curve.

If a quantity of chlorine (Cl) of the sample is measured using the apparatus for measuring the output material of a pulp processing according to Figure 2, the direct measurement may be performed in a manner similar to that of potassium (K). The ionic strength of samples and standards may be adjusted to be the same by addition of the one or more ionic strength adjustors. In this example, the standards may include at least one solution of potassium chloride (KCl) and sodium chloride (NaCl). In this example, the one or more ionic strength adjustors may include sodium sulfate $Na_2SO_4$ and/or potassium chloride $K_2SO_4$. The standard solutions with various concentrations of chlorine may be measured, and the measured potentials (mV) of the electrode 206 may be plotted against the standard concentration to construct a calibration curve.

Then an electrical potential of the sample of the fly ash is measured with the electrode 206 and a chlorine concentration in the sample may be quantified using the calibration curve.

If a quantity of sodium (Na) of the sample is measured using the apparatus for measuring the output material of a pulp processing according to Figure 2, the direct measurement may be performed in a manner similar to that of potassium (K). The ionic strength of samples and standards may be adjusted to be the same by addition of the one or more ionic strength adjustors. In this example, the standards may include at least one solution of sodium chloride (NaCl) and sodium sulfate ($Na_2SO_4$). In this example, the one or more ionic strength adjustors may include potassium sulfate ($K_2SO_4$) and/or potassium chloride (KCl). The standard solutions with various concentrations of sodium may be measured, and the measured potentials (mV) of the electrode 206 may be plotted against the standard concentration to construct a calibration curve.

Then an electrical potential of the sample of the fly ash is measured with the electrode arrangement 202 and a sodium concentration in the sample may be quantified using the calibration curve.

A quantity of carbonate ($CO_3$, $HCO_3$) of the sample may be measured using the apparatus for measuring the output material of a pulp processing according to Figure 2, and the direct measurement may be performed in a manner similar to those of chlorine (Cl), potassium (K) and sodium (Na).

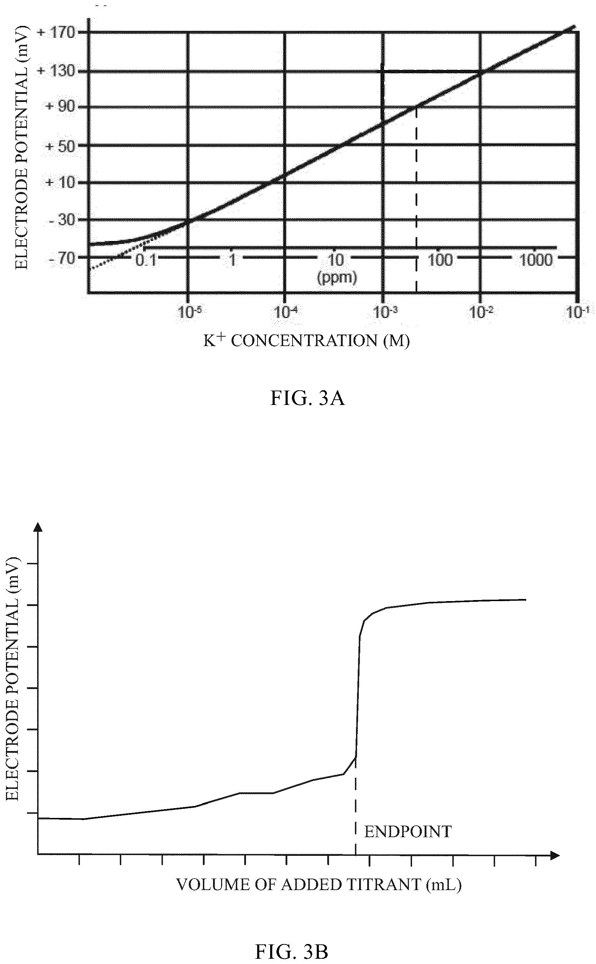

Alternatively or additionally, a quantity of carbonate ($CO_3$, $HCO_3$) of the sample is may be measured using a potentiometric titration method. In the potentiometric titration method, an endpoint or equivalence point is determined with a pH electrode for determining the quantity of carbonate as shown in Figure 3B. A standardized acid is used as a titrant. In Figure 3B, the electrode potential and the volume of added titrant are in arbitrary scales and may also be in other units than mV and mL.

Then an electrical potential of the sample of the fly ash is measured with the electrode 206 and a carbonate concentration in the sample may be quantified using the calibration curve.

Figure 3A illustrates an example of a slope check and/or calibration curve of the direct measurement of potassium. For example, if a measurement of the sample results in a value of 90 mV, the concentration of potassium in the sample is between 1/1000 and 1/100 in moles. The measurements of sodium, chlorine and carbonate may be performed in a corresponding manner.

Another possible measurement method is a standard addition method. The potential of the sample solution is recorded before and after an addition of precise aliquot(s) of a known standard solution. Quantitative analyte concentration may then be computed according to a predetermined manner.

If a quantity of potassium (K) of the sample is measured using the apparatus for measuring the output material of a pulp processing according to Figure 2 according to the standard addition method the measurement may be performed as follows, the standard addition method being known by a skilled person, *perse.* The ionic strength of samples and standards may be adjusted to be the same by addition of the one or more ionic strength adjustors although it is not always necessary. In this example, the standards may include at least one solution of potassium sulfate ($K_2SO_4$) and potassium chloride (KCF). In this example the one or more ionic strength adjustors may include sodium sulfate ($Na_2SO_4$) and/or sodium chloride (NaCl). The standard solutions with various known concentrations of potassium may be added to the sample, and the electric potentials may then be recorded. The quantity of potassium of the sample may be computed using the following equation or the like, for example:

$$C = \frac{\frac{c_{std} \times V_{std}}{V_{tot}}}{\left(1 + \frac{V_{std}}{V_{tot}}\right) \times 10^{\frac{E_2 - E_1}{S}} - 1} \times D_f, \qquad (1)$$

where C denotes analyte concentration in the original sample [mg/l], $V_{std}$ denotes volume of standard added [$\mu$l or ml], Vtot denotes $V_{water} + V_{sample} + V_{ISA}$ [$\mu$l or ml], $V_{water}$ denotes volume of diluter such as water [$\mu$l or ml], $V_{sample}$ denotes volume of original sample [$\mu$l or ml], $V_{ISA}$ denotes volume of ionic strength adjustor solution [$\mu$l or ml], $E_1$ denotes potential measured before standard addition [mV], $E_2$ denotes potential measured after standard addition [mV], S denotes electrode slope at the measuring temperature, and $D_f$ denotes dilution factor, $D_f = \frac{V_{tot}}{V_{sample}}$. The concentration C means the quantity of potassium in the sample in this example.

If a quantity of chlorine (Cl) of the sample is measured using the apparatus for measuring the output material of a pulp processing according to Figure 2, the standard addition method may be performed in a manner similar to that of potassium (K). The ionic strength of samples and standards may be adjusted to be the same by addition of the one or more ionic strength adjustors. In this example, the standards may include at least one of potassium chloride (KCl) and sodium chloride (NaCl). In this example, the one or more ionic strength adjustors may include sodium sulfate $Na_2SO_4$ and/or potassium chloride $K_2SO_4$. The standard solutions with various known concentrations of potassium may be added to the sample, and the electric potentials may then be recorded. The quantity of chlorine of the sample may be computed using the equation (1). The concentration C in this example becomes the quantity of chlorine in the sample.

If a quantity of sodium (Na) of the sample is measured using the apparatus for measuring the output material of a pulp processing according to Figure 2, the standard addition method may be performed in a manner similar to that of potassium (K) and chlorine (Cl). The ionic strength of samples and standards may be adjusted to be the same by addition of the one or more ionic strength adjustors. In this example, the standards may include at least one of sodium chloride (NaCl) and sodium sulfate ($Na_2SO_4$). In this example, the one or more ionic strength adjustors may include potassium chloride (KCl) and/or potassium sulfate ($K_2SO_4$). The standard solutions with various known concentrations of sodium may be added to the sample, and the electric potentials may then be recorded. The quantity of sodium of the sample may be computed using the equation (1). The concentration C in this example becomes the quantity of sodium in the sample.

A quantity of carbonate ($CO_3$, $HCO_3$) of the sample may be measured using the apparatus for measuring the output material of a pulp processing according to Figure 2, and the standard addition method may be performed in a manner similar to that of potassium (K) and chlorine (Cl) and sodium (Na).

Alternatively or additionally, a quantity of carbonate ($CO_3$, $HCO_3$) of the sample is may be measured using the potentiometric titration method.

If the measurement is performed according to an embodiment of Figure 2, where all substances potassium (K), chlorine (Cl), sodium (Na), and carbonate ($CO_3$, $HCO_3$) are measured in a common measurement chamber 208. In this embodiment, the two or more substances potassium (K), chlorine (Cl), sodium (Na), and carbonate ($CO_3$, $HCO_3$) may be measured one after another. However, if the same standard fits for two or more substances they may be measured simultaneously.

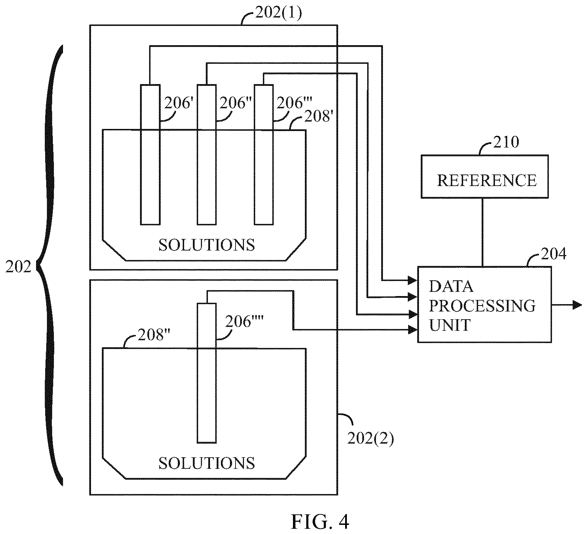

Figure 4 illustrates an example of an embodiment, where potassium (K), chlorine (Cl), sodium (Na) are measured using a common measurement chamber 208', and carbonate ($CO_3$, $HCO_3$) is measured in a separate measurement chamber 208". The electrode arrangement 206 still may have separate electrodes 206', 206", 206‴, 206⁗ for at least two different measurements of at least two substances potassium (K), chlorine (Cl), sodium (Na), and carbonate ($CO_3$, $HCO_3$).

The embodiment of Figure 4 may be explained more generally as follows. The at least one ion-selective electrode arrangement 206 may comprise a first ion selective electrode arrangement 206(1), which may provide the data processing unit 204 with the information on quantity of at least one of the potassium (K), chlorine (Cl) and sodium (Na), and a second electrode arrangement 206(2) may provide the data processing unit 204 with the information on quantity of the carbonate. The second ion selective electrode arrangement 206(2) may perform an acidimetric titration, which may be called a potentiometric measurement.

In some embodiments, any pair of the three substances potassium (K), chlorine (Cl), sodium (Na) may be measured in a common measurement chamber. That is, potassium and chlorine, potassium and sodium, and chlorine and sodium may be measured in a common measurement chamber while the carbonate may be measured in a separate measurement chamber.

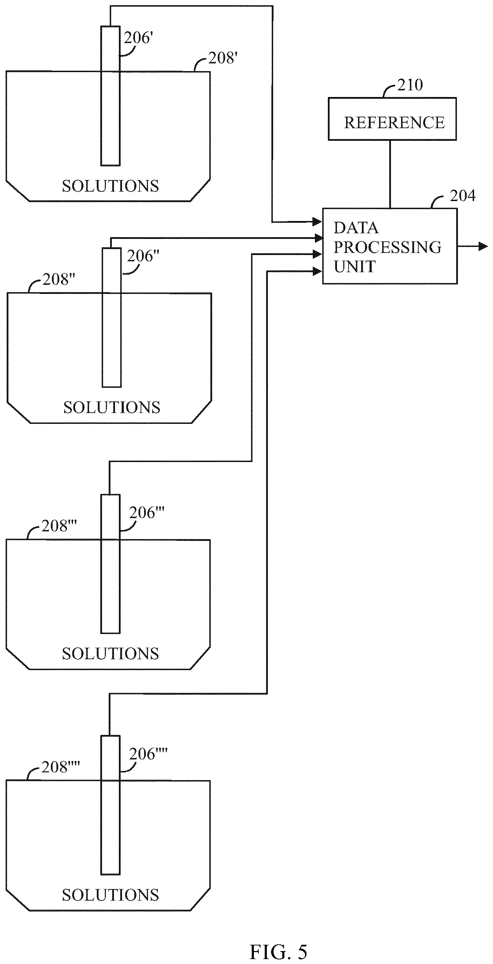

Figure 5 illustrates an example of an embodiment, where potassium (K), chlorine (Cl), sodium (Na) and carbonate ($CO_3$, $HCO_3$) are measured using a separate measurement chambers 208', 208", 208‴, 208⁗. In this example, the electrode arrangement 206 has separate electrodes 206', 206", 206‴, 206⁗ for different measurements of the four substances potassium (K), chlorine (Cl), sodium (Na), and carbonate ($CO_3$, $HCO_3$).

The electrode potential of the electrode 206 is or of the electrodes 206', 206", 206‴, 206⁗ shown in Figures 2, 4 and 5 are measured against a potential of at least one reference electrode 210, which may be a double-junction reference electrode, for example. However, the measurement presented in this document is not limited to that, and it should be noted that a person skilled in the art is familiar of a variety of reference electrodes, *per se.* The at least one reference electrode 210 is shown only in Figures 4 and 5 because it is naturally inherent to the ion sensitive electrode measurements and requires thus no further description.

A slope is defined as a change in potential of the measuring electrode observed when the concentration changes by a factor that is typically 10. The slope measures sensitivity of the electrode arrangement 202 and/or the electrodes 206, 206', 206", 206‴, 206⁗.

A slope check measurement, which may also be called calibration of the measurement, requires the one or more ionic strength adjustors (ISA). The slope check may be performed in a following manner:

1. A known amount diluter (for example 100 ml of distilled water) and a known amount (for example 2 ml) of the ISA are added in a measurement chamber 208, 208', 208", 208‴, 208⁗,
2. A known amount of a known concentration (for example 1 ml of 1000 ppm) of the one or more standards is added in the measurement chamber 208, 208', 208", 208‴, 208⁗ and the reading is recorded,
3. A known amount of a known concentration (for example 10 ml of 1000 ppm) the one or more standards is added in the measurement chamber 208, 208', 208", 208‴, 208⁗ and the reading is recorded,
4. The difference between the two readings is determined,

The difference between the readings defines the slope. In the direct measurement, it also defines the calibration curve for any of the measured substances potassium (K), chlorine (Cl), sodium (Na), and/or carbonate ($CO_3$, $HCO_3$). The real slope value S may also be used in the standard addition method equation (1).

Ideal values of the slope or the readings are given by the electrode manufacturers. If the measured slope matches with the ideal slope (within certain/acceptable tolerance), it indicates that the electrode 206, 206', 206", 206‴, 206⁗ and/or the ISE arrangement 202 operate(s) properly. Any difference from the ideal values indicates that the electrode 206, 206', 206", 206‴, 206⁗ and/or the ISE arrangement 202 do(es) not operate properly.

In an embodiment, the first ion selective electrode arrangement 206(1) may have potassium chloride (KCl) and sodium sulfate ($Na_2SO_4$) as reagents for providing the information on the quantities of potassium and chlorine. Potassium chloride may be used as a standard and sodium sulfate as an ionic strength adjuster for potassium and chloride measurements. Sodium sulfate may be used as a standard and potassium chloride as an ionic strength adjuster for sodium measurement.

In an embodiment, the second ion selective electrode arrangement 206(2) is configured to have an acid as a reagent. In an embodiment, the acid may be hydrochloric acid (HCl) and/or sulfuric acid ($H_2SO_4$).

In an embodiment, the data processing unit 204 may compute the quantity of sulfate stoichiometrically based on stoichiometry of dissolved fly ash. In an embodiment, the fly ash may be dissolved in water.

In an embodiment, the at least one ion-selective electrode arrangement 206 may comprise a potassium ion-selective electrode, sensitivity or a slope of which may be determined for the computation as a response to a potassium compound, which has a known quantity of potassium. The potassium compound may include potassium chloride (KCl) and/or potassium sulfate ($K_2SO_4$).

In an embodiment, the at least one ion-selective electrode arrangement 206 may comprise a chloride ion-selective electrode, sensitivity or a slope of which may be determined for the computation as a response to a chloride compound, which has a known quantity of chloride. The chloride compound may include potassium chloride (KCl) and/or sodium chloride (NaCl).

In an embodiment, the at least one ion-selective electrode arrangement 206 may comprise a sodium ion-selective electrode, sensitivity or a slope of which may be determined for the computation as a response to a sodium compound, which has a known quantity of sodium. The sodium compound may include sodium chloride (NaCl), sodium sulfate ($Na_2SO_4$) and/or sodium bromide (NaBr). The potassium bromide may be used in an embodiment, where sodium chloride of the sample is measured. The sodium bromide may be an ionic strength adjustor for potassium and chlorine. The sodium bromide may be a standard in a potassium measurement.

What is explained above, the known quantity may mean a known concentration.

In an embodiment, the at least one ion-selective electrode arrangement 206 may comprise a chloride ion-selective electrode and a potassium ion selective electrode, which are located within a common sample container 208. Also a sodium ion-selective electrode 206‴ may be in the common sample container 208.

In an embodiment, the data processing unit 204 may detect a change of the sensitivity and/or the slope of at least one of the electrodes 206, and the data processing unit 204 may determine performance of the at least one of the electrodes 206 based on the change of the sensitivity. In an embodiment, the data processing unit 204 may determine a state of the at least one of the electrodes 206 based on the change of the sensitivity. In an embodiment, the data processing unit 204 may determine need for maintenance or replacement of the at least one of the electrode system 206 based on the change of the sensitivity.

In an embodiment, the data processing unit 204 may also indicate the performance, the state and/or the need for maintenance or replacement of the at least one of the electrode system 206 based on the change of the sensitivity.

Both a change in sensitivity and a slow response time may indicate a deviation from a proper theoretical operation of the electrode arrangement 202, the electrode system 206, and/or the electrodes 206', 206", 206‴, 206⁗, which may be broken or contaminated, for example. If it is a question of a breakage, a replacement may be required. If it is a question of contamination, maintenance may be enough.

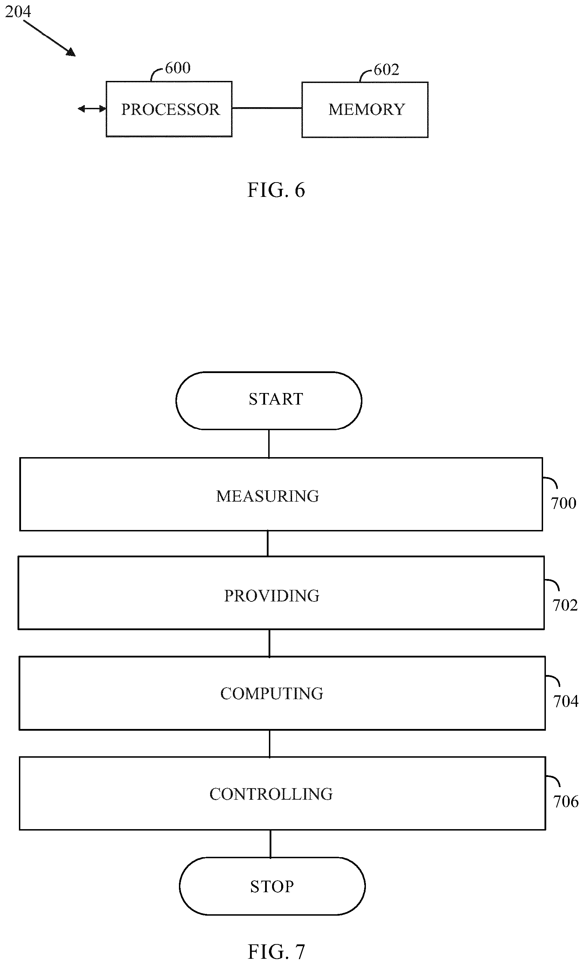

Figure 6 illustrates an example of the data processing unit 204. The data processing unit 204 may comprise one or more processors 600 and one or more memories 602, which may including a computer program code. The one or more memories 602 and the computer program code may, with the one or more processors 600, cause the data processing unit 204 at least to receive the information on the quantity of carbonate and the information on the quantity of the at least one of the following: potassium (K), chlorine (Cl) and sodium (Na), and compute and output the quantity of sulfate ($SO_4$) of the fly ash sample. The data processing unit 204 may also include an analog-digital converter in order to convert the analog signals from the ion sensitive electrodes 206, 206', 206", 206‴, 206⁗ into a digital form for a digital data processing.

In a second process example, the output material may comprise instead of the fly ash, which is explained before in conjunction of the first process example, black liquor, green liquor, white liquor, the liquors also being output materials of the pulp processing (see Figure 1). The measurement may also be performed using output material of ash treatment, such as ash leaching and ash crystallization, which may be considered to be included under term fly ash.

When measuring potassium (K), chlorine (Cl), sodium (Na), and/or carbonate ($CO_3$, $HCO_3$) for determining sulfate ($SO_4$) of the black liquor, the sample should include the black liquor instead of the fly ash. When measuring potassium (K), chlorine (Cl), sodium (Na), and/or carbonate ($CO_3$, $HCO_3$) for determining sulfate ($SO_4$) of the green liquor, the sample should include the green liquor instead of the fly ash. When measuring potassium (K), chlorine (Cl), sodium (Na), and/or carbonate ($CO_3$, $HCO_3$) for determining sulfate ($SO_4$) of the white liquor, the sample should include the white liquor instead of the fly ash. Otherwise, the measurement is performed in a corresponding manner.

Potassium (K), chlorine (Cl), sodium (Na) and carbonate ($CO_3$, $HCO_3$) may be measured, in an embodiment, using the at least one ion-selective electrode arrangement 202. In an embodiment, potassium (K), chlorine (Cl) and sodium (Na) may be measured the first electrode arrangement 202(1). Then a second electrode arrangement 202(2) may be used to perform the acidimetric titration and provide the data processing unit (204) with the information on quantity of the carbonate ($CO_3$, $HCO_3$).

Quantity of sulfate may be computed based on these measurements. The following simplified equation may be utilized in the computation:

$$[SO_4] = \frac{1}{2}\left[\frac{[Na]}{M(Na)} + \frac{[K]}{M(K)} - \frac{2*[CO_3]}{M(CO_3)} - \frac{[HCO_3]}{M(HCO_3)} - \frac{[Cl]}{M(Cl)}\right] * M(SO_4).$$

Quantity m in percentage may be computed using the following equation: m-% = [x]/([SO_4] + [Cl] + [CO_3] + [HCO_3] + [K] + [Na]), where [x] means concentration (mg/l) of a particular ion (SO_4, Cl, CO_3, K or Na) and [SO_4] denotes concentration of sulfate, [Cl] denotes concentration of chlorine, [CO_3] denotes concentration of carbonate, [HCO_3] denotes concentration of hydrogen carbonate, [K] denotes concentration of potassium and [Na] denotes concentration of sodium. Concentration is one form of quantity in addition to mass, volume and amount in moles.

In an embodiment, alkaline components OH-, S$^{2-}$ and $CO_3^{2-}$ may be measured using potentiometric titration method, sodium ions Na+, potassium ions K$^+$ and chloride ions Cl$^-$ may be measured the first electrode arrangement 202(1) based on ion selective electrodes, and then quantity of sulfate ions $SO_4^{2-}$, thiosulfate ions $S_2O_3^{2-}$, sulphite ions $SO_3^{2-}$ may be computed based on the measurements. OH-, S$^{2-}$, $S_2O_3^{2-}$ may interfere with other measurements such as a chloride measurement. Hence, these measurements may need acidifying and/or oxidizing chemical to correct the measurements. Quantity of sulfate may be computed based on these measurements. The following simplified equation may be utilized in the computation:

$$[SO_4] = \frac{1}{2}\left[\frac{[Na]}{M(Na)} + \frac{[K]}{M(K)} - \left(\frac{[OH]}{M(OH)} + \frac{2[S]}{M(S)} + \frac{2[CO_3]}{M(CO_3)} + \frac{[Cl]}{M(Cl)}\right)\right] * M(SO_4),$$

here [SO_4] may be understood to include also other sulphur oxides, i.e. $[SO_4] \approx [SO_4] + [S_2O_3] + [SO_3]$.

When at least a quantity of at least one of the potassium (K), chlorine (Cl), sodium (Na), carbonate (CO_3, HCO_3) and sulfate (SO_4) is determined, removal of chlorine (Cl) and/or potassium (K) may controlled in the feed of the black liquor to the recovery boiler 100 and/or in the liquor circulation 94 related to the recovery boiler 100.

A common way to regulate chlorine and/or potassium levels in the recovery boiler is to purge the fly ash collected in an electrostatic precipitator (ESP), i.e. the ESP ash, and not to recirculate it to the black liquor before the black liquor is fed to the recovery boiler, for example. Chlorine and/or potassium may be removed from the fly ash in an ash treating process, in which the fly ash is treated by leaching, for example. The treated fly ash is then recirculated to the black liquor.

Figure 7 is a flow chart of the measurement method and the controlling method. In step 700, output material, which is expected to include sodium sulfate (Na_2SO_4), potassium sulfate (K_2SO_4), sodium carbonate (Na_2CO_3), sodium chloride (NaCl), potassium carbonate (K_2CO_3) and potassium chloride (KCl) is measured with at least one ion-selective electrode arrangement 202.

In step 702, a data processing unit 204 is provided, based on the measurement with the at least one ion-selective electrode arrangement 202, with the information on quantity of at least one of the following: potassium (K), chlorine (Cl), sodium (Na), and carbonate (CO_3, HCO_3).

In step 704, quantity of sulfate (SO_4) of the output material is computed based on the information received from the at least one ion-selective electrode arrangement 202 and thereafter output by the data processing unit 204.

In step 706, which is included in the controlling method, removal of chlorine and/or potassium from the pulp process is controlled based on the information and the quantity of sulfate (SO_4) by the data processing unit 204.

The method shown in Figure 7 may be implemented as a logic circuit solution or computer program. The computer program may be placed on a computer program distribution means for the distribution thereof. The computer program distribution means is readable by a data processing device, and it encodes the computer program commands, carries out the measurements and optionally controls the process(es) on the basis of the measurements.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

## Claims

1. An apparatus for measuring output material of a recovery boiler of pulp processing, **characterized in that** the apparatus of the kraft pulping comprises;

at least one ion-selective electrode arrangement (202) configured to measure fly ash of the output material, which includes sodium sulfate ($Na_2SO_4$), potassium sulfate ($K_2SO_4$), sodium carbonate ($Na_2CO_3$), sodium chloride (NaCl), potassium carbonate ($K_2CO_3$) and potassium chloride (KCl), and provide the data processing unit (204) with information on quantity of at least one of the following: potassium (K), chlorine (Cl) sodium (Na), and carbonate ($CO_3$, $HCO_3$); and
the data processing unit (204) is configured to compute quantity of sulfate ($SO_4$) of the output material based on the information received from the at least one ion-selective electrode arrangement (202) for input to a digester (96) or further processing.

2. The apparatus of claim 1, **characterized in that** the output material comprises fly ash, black liquor, white liquor or green liquor.

3. The apparatus of claim 1, **characterized in that** the data processing unit (204) is configured to compute the quantity of sulfate based on stoichiometry of the output material of a dissolved form.

4. The apparatus of claim 1, **characterized in that** the at least one ion-selective electrode arrangement (202) comprises a chloride ion-selective electrode (206'), a potassium ion selective electrode (206"), and sodium ion-selective electrode (206‴), which are located within a common sample container (208).

5. The apparatus of claim 1, **characterized in that** data processing unit (204) is configured to control removal of chlorine and/or potassium from the pulp process based on the information and the quantity of sulfate ($SO_4$).

6. An apparatus of claim 1, **characterized in that** the data processing unit (204) comprises

one or more processors (600); and
one or more memories (602) including computer program code;
the one or more memories (602) and the computer program code configured to, with the one or more processors (600), cause the data processing unit (204) at least to receive the information on the quantity of the at least one of the following: potassium (K), chlorine (Cl) and sodium (Na), and carbonate ($CO_3$, $HCO_3$) of the output material, and compute and output the quantity of sulfate ($SO_4$) of the output material.

7. A measuring method of output material of a recovery boiler of pulp processing, **characterized by**

measuring (700), with at least one ion-selective electrode arrangement (202), fly ash of the output material, which is expected to include sodium sulfate ($Na_2SO_4$), potassium sulfate ($K_2SO_4$), sodium carbonate ($Na_2CO_3$), sodium chloride (NaCl), potassium carbonate ($K_2CO_3$) and potassium chloride (KCl);
providing (702), based on the measurement with the at least one ion-selective electrode arrangement (202), a data processing unit (204) with the information on quantity of at least one of the following: potassium (K), chlorine (Cl), sodium (Na), and carbonate ($CO_3$, $HCO_3$); and
computing and outputting (704), by the data processing unit (204), quantity of sulfate ($SO_4$) of the output material based on the information received from the at least one ion-selective electrode arrangement (202) for input to a digester (96) or to further processing.

8. A method of controlling a pulp process with a recovery boiler, **characterized by**

measuring (700), with at least one ion-selective electrode arrangement (202), fly ash of output material, which is expected to include sodium sulfate ($Na_2SO_4$), potassium sulfate ($K_2SO_4$), sodium carbonate ($Na_2CO_3$), sodium chloride (NaCl), potassium carbonate ($K_2CO_3$) and potassium chloride (KCl);
providing (702), based on the measurement with the at least one ion-selective electrode arrangement (202), a data processing unit (204) with the information on quantity of at least one of the following: potassium (K), chlorine (Cl), sodium (Na), and carbonate ($CO_3$, $HCO_3$); and
computing and outputting (704), by the data processing unit (204), quantity of sulfate ($SO_4$) of the output material based on the information received from the at least one ion-selective electrode arrangement (202).
controlling (706) removal of chlorine and/or potassium from the process of the output material based on the information and the quantity of sulfate ($SO_4$), the removal of chlorine (Cl) and/or potassium (K) being controlled in feed of black liquor to the recovery boiler (100) and/or in a liquor circulation (94) related to the recovery boiler (100).

**EP 3 974 575 B1**

**Patentansprüche**

1.  Vorrichtung zur Messung des Ausgangsstoffs eines Rückgewinnungskessels der Zellstoffverarbeitung, **dadurch gekennzeichnet, dass** die Vorrichtung des Kraftzellstoffverfahrens Folgendes umfasst:

    mindestens eine ionenselektive Elektrodenanordnung (202), die so konfiguriert ist, dass sie die Flugasche des Ausgangsstoffs misst, welche Natriumsulfat ($Na_2SO_4$), Kaliumsulfat ($K_2SO_4$), Natriumcarbonat ($Na_2CO_3$), Natriumchlorid (NaCl), Kaliumcarbonat ($K_2CO_3$) und Kaliumchlorid (KCl) enthält, und der Datenverarbeitungseinheit (204) Informationen über die Menge von mindestens einem der folgenden Stoffe bereitstellt: Kalium (K), Chlor (Cl), Natrium (Na) und Carbonat ($CO_3$, $HCO_3$); und
    die Datenverarbeitungseinheit (204) so konfiguriert ist, dass sie die Menge an Sulfat ($SO_4$) des Ausgangsstoffs auf der Grundlage der von der mindestens einen ionenselektiven Elektrodenanordnung (202) empfangenen Informationen zur Eingabe in einen Kocher (96) oder zur weiteren Verarbeitung berechnet.

2.  Vorrichtung nach Anspruch 1, **dadurch gekennzeichnet, dass** der Ausgangsstoff Flugasche, Schwarzlauge, Weißlauge oder Grünlauge umfasst.

3.  Vorrichtung nach Anspruch 1, **dadurch gekennzeichnet, dass** die Datenverarbeitungseinheit (204) so konfiguriert ist, dass sie die Sulfatmenge auf der Grundlage der Stöchiometrie des Ausgangsstoffs in gelösten Form berechnet.

4.  Vorrichtung nach Anspruch 1, **dadurch gekennzeichnet, dass** die mindestens eine ionenselektive Elektrodenanordnung (202) eine chloridionenselektive Elektrode (206'), eine kaliumionenselektive Elektrode (206") und eine natriumionenselektive Elektrode (206‴) umfasst, die in einem gemeinsamen Probenbehälter (208) angeordnet sind.

5.  Vorrichtung nach Anspruch 1, **dadurch gekennzeichnet, dass** die Datenverarbeitungseinheit (204) so konfiguriert ist, dass sie die Entfernung von Chlor und/oder Kalium aus dem Zellstoffprozess auf der Grundlage der Informationen und der Menge an Sulfat ($SO_4$) steuert.

6.  Vorrichtung nach Anspruch 1, **dadurch gekennzeichnet, dass** die Datenverarbeitungseinheit (204)

    einen oder mehrere Prozessoren (600) umfasst; und
    einen oder mehrere Speicher (602) mit Computerprogrammcode umfasst;
    wobei der eine oder die mehreren Speicher (602) und der Computerprogrammcode dafür konfiguriert sind, mit dem einen oder den mehreren Prozessoren (600) die Datenverarbeitungseinheit (204) zu veranlassen, zumindest die Informationen über die Menge des mindestens einen der folgenden Stoffe zu empfangen: Kalium (K), Chlor (Cl) und Natrium (Na) und Carbonat ($CO_3$, $HCO_3$) des Ausgangsstoffs, und die Menge an Sulfat ($SO_4$) des Ausgangsstoffs zu berechnen und auszugeben.

7.  Verfahren zur Messung des Ausgangsstoffs eines Rückgewinnungskessels der Zellstoffverarbeitung, **gekennzeichnet durch**

    Messen (700) mit mindestens einer ionenselektiven Elektrodenanordnung (202) der Flugasche des Ausgangsstoffs, welche voraussichtlich Natriumsulfat ($Na_2SO_4$), Kaliumsulfat ($K_2SO_4$), Natriumcarbonat ($Na_2CO_3$), Natriumchlorid (NaCl), Kaliumcarbonat ($K_2CO_3$) und Kaliumchlorid (KCl) enthält;
    Bereitstellen (702), basierend auf der Messung mit der mindestens einen ionenselektiven Elektrodenanordnung (202), der Informationen über die Menge von mindestens einem der folgenden Stoffe: Kalium (K), Chlor (Cl), Natrium (Na) und Carbonat ($CO_3$, $HCO_3$), für eine Datenverarbeitungseinheit (204); und
    Berechnen und Ausgeben (704), durch die Datenverarbeitungseinheit (204), der Menge an Sulfat ($SO_4$) des Ausgangsstoffs auf der Grundlage der von der mindestens einen ionenselektiven Elektrodenanordnung (202) empfangenen Informationen zur Eingabe in einen Kocher (96) oder zur weiteren Verarbeitung.

8.  Verfahren zur Steuerung eines Zellstoffprozesses mit einem Rückgewinnungskessel, **gekennzeichnet durch**

    Messen (700) mit mindestens einer ionenselektiven Elektrodenanordnung (202) der Flugasche des Ausgangsstoffs, welche voraussichtlich Natriumsulfat ($Na_2SO_4$), Kaliumsulfat ($K_2SO_4$), Natriumcarbonat ($Na_2CO_3$), Natriumchlorid (NaCl), Kaliumcarbonat ($K_2CO_3$) und Kaliumchlorid (KCl) enthält;
    Bereitstellen (702), basierend auf der Messung mit der mindestens einen ionenselektiven Elektrodenanordnung (202), der Informationen über die Menge von mindestens einem der folgenden Stoffe: Kalium (K), Chlor (Cl), Natrium (Na) und Carbonat (CO$_3$, HCO$_3$) für eine Datenverarbeitungseinheit (204); und

Berechnen und Ausgeben (704), durch die Datenverarbeitungseinheit (204), der Menge an Sulfat (SO$_4$) des Ausgangsstoffs auf der Grundlage der von der mindestens einen ionenselektiven Elektrodenanordnung (202) empfangenen Informationen;

Steuern (706) der Entfernung von Chlor und/oder Kalium aus dem Prozess des Ausgangsstoffs auf der Grundlage der Informationen und der Menge an Sulfat (SO$_4$), wobei die Entfernung von Chlor (Cl) und/oder Kalium (K) in der Zufuhr von Schwarzlauge zum Rückgewinnungskessel (100) und/oder in einem mit dem Rückgewinnungskessel (100) verbundenen Laugenkreislauf (94) gesteuert wird.

## Revendications

1.  Appareil pour mesurer le matériau de sortie d'une chaudière de récupération de traitement de la pâte à papier, **caractérisé en ce que** l'appareil de fabrication de pâte kraft comprend :

    au moins un agencement d'électrodes sélectives (202) configuré pour mesurer les cendres volantes du matériau de sortie, qui contient du sulfate de sodium (Na$_2$SO$_4$), du sulfate de potassium (K$_2$SO$_4$), du carbonate de sodium (Na$_2$CO$_3$), du chlorure de sodium (NaCl), du carbonate de potassium (K$_2$CO$_3$) et du chlorure de potassium (KCl), et fournir à l'unité de traitement de données (204) des informations sur la quantité d'au moins l'un des suivants : potassium (K), chlore (Cl), sodium (Na), et carbonate (CO$_3$, HCO$_3$) ; et
    l'unité de traitement de données (204) est configurée pour calculer la quantité de sulfate (SO$_4$) du matériau de sortie sur la base des informations reçues par l'au moins un agencement d'électrodes sélectives (202) pour une introduction dans un digesteur (96) ou un traitement ultérieur.

2.  Appareil selon la revendication 1, **caractérisé en ce que** le matériau de sortie comprend des cendres volantes, de la liqueur noire, de la liqueur blanche ou de la liqueur verte.

3.  Appareil selon la revendication 1, **caractérisé en ce que** l'unité de traitement de données (204) est configurée pour calculer la quantité de sulfate sur la base de la stœchiométrie du matériau de sortie d'une forme dissoute.

4.  Appareil selon la revendication 1, **caractérisé en ce que** l'au moins un agencement d'électrodes sélectives (202) comprend une électrode sélective de l'ion chlore (206'), une électrode sélective de l'ion potassium (206"), et une électrode sélective de l'ion sodium (206‴), qui sont situées à l'intérieur d'un récipient à échantillon commun (208).

5.  Appareil selon la revendication 1, **caractérisé en ce que** l'unité de traitement de données (204) est configurée pour commander l'élimination du chlore et/ou du potassium depuis le traitement de la pâte sur la base des informations et de la quantité de sulfate (SO$_4$).

6.  Appareil selon la revendication 1, **caractérisé en ce que** l'unité de traitement de données (204) comprend

    un ou plusieurs processeurs (600) ; et
    une ou plusieurs mémoires (602) contenant un code de programme informatique ;
    la ou les mémoires (602) et le code de programme informatique étant configurés pour, avec le ou les processeurs (600) amener l'unité de traitement de données (204) au moins à recevoir les informations sur la quantité de l'au moins un parmi les suivants : potassium (K), chlore (Cl) et sodium (Na), et carbonate (CO$_3$, HCO$_3$) du matériau de sortie, et calculer et délivrer en sortie la quantité de sulfate (SO$_4$) du matériau de sortie.

7.  Procédé de mesure de matériau de sortie d'une chaudière de récupération de traitement de la pâte à papier, **caractérisé par**

    la mesure (700), avec au moins un agencement d'électrodes sélectives (202), des cendres volantes du matériau de sortie, qui est sensé contenir du sulfate de sodium (Na$_2$SO$_4$), du sulfate de potassium (K$_2$SO$_4$), du carbonate de sodium (Na$_2$CO$_3$), du chlorure de sodium (NaCl), du carbonate de potassium (K$_2$CO$_3$) et du chlorure de potassium (KCl) ;
    la fourniture (702), sur la base de la mesure avec l'au moins un agencement d'électrodes sélectives (202), à une unité de traitement de données (204), des informations sur la quantité d'au moins l'un des suivants : potassium (K), chlore (Cl), sodium (Na), et carbonate (CO$_3$, HCO$_3$) ; et
    le calcul et la délivrance en sortie (704), par l'unité de traitement de données (204), de la quantité de sulfate

(SO$_4$) du matériau de sortie sur la base des informations reçues par l'au moins un agencement d'électrodes sélectives (202) pour une introduction dans un digesteur (96) ou un traitement ultérieur.

8. Procédé de commande d'un traitement de pâte à papier avec une chaudière de récupération, **caractérisé par**

la mesure (700), avec au moins un agencement d'électrodes sélectives (202), des cendres volantes du matériau de sortie, qui est sensé contenir du sulfate de sodium (Na$_2$SO$_4$), du sulfate de potassium (K$_2$SO$_4$), du carbonate de sodium (Na$_2$CO$_3$), du chlorure de sodium (NaCl), du carbonate de potassium (K$_2$CO$_3$) et du chlorure de potassium (KCl) ;
la fourniture (702), sur la base de la mesure avec l'au moins un agencement d'électrodes sélectives (202), à une unité de traitement de données (204), des informations sur la quantité d'au moins l'un des suivants : potassium (K), chlore (Cl), sodium (Na), et carbonate (CO$_3$, HCO$_3$) ; et
le calcul et la délivrance en sortie (704), par l'unité de traitement de données (204), de la quantité de sulfate (SO$_4$) du matériau de sortie sur la base des informations reçues par l'au moins un agencement d'électrodes sélectives (202) ;
la commande (706) de l'élimination du chlore et/ou du potassium depuis le traitement du matériau de sortie sur la base des informations et de la quantité de sulfate (SO$_4$), l'élimination du chlore (Cl) et/ou du potassium (K) étant commandée dans la charge de liqueur noire allant dans la chaudière de récupération (100) et/ou dans une circulation de liqueur (94) liée à la chaudière de récupération (100).

WOOD
CHIPS

WHITE LIQUOR

94

SAMPLER

200

DIGESTER 96

TO ISE
ARRANGEME

WASHERS 98 → PULP

200

BLACK
LIQUOR

STEAM

RECOVERY
BOILER

100

SMELT

DISSOLVING 102

GREEN
LIQUOR

200

CAUSTICIZING 104

204

DATA
PROCESSING
UNIT

SAMPLER

200

COMBUSTION
FUMES

202

ISE
ARRANGEMENT

TO
PRESENTATION
AND/OR
CONTROL

**FIG. 1**

STANDARD

ISA

SAMPLE

202

204

DATA
PROCESSING
UNIT

206

208

SOLUTIONS

**FIG. 2**

FIG. 3A

FIG. 3B

FIG. 4

FIG. 5

204

```
        ┌─600              ┌─602
   ◄──► │ PROCESSOR │──────│  MEMORY  │
        └──────────┘       └──────────┘
```

FIG. 6

START

| MEASURING | 700 |

| PROVIDING | 702 |

| COMPUTING | 704 |

| CONTROLLING | 706 |

STOP

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 20205505